# EUROPEAN PATENT SPECIFICATION

(11) **EP 0 741 758 B1**
(45) Date of publication and mention of the grant of the patent: **12.09.2001**
(21) Application number: 95910869.7
(22) Date of filing: 23.01.1995
(51) Int. Cl.: C08J 11/04, C08J 11/06, C08L 95/00, C08L 17/00

(54) **PROCESS FOR PRODUCING RUBBER MODIFIED RUBBER CEMENT**
VERFAHREN ZUR HERSTELLUNG VON KAUTSCHUKMODIFIZIERTEM ASPHALTZEMENT
PROCEDE DE PRODUCTION DE CIMENT A L'ASPHALTE MODIFIE AU CAOUTCHOUC

(30) Priority: 26.01.1994 US 188329; 29.12.1994 US 366061
(43) Date of publication of application: 13.11.1996
(73) Proprietor: NESTE/WRIGHT ASPHALT PRODUCTS CO., Channelview, TX 77530-3538 (US)
(72) Inventor: FLANIGAN, Theodore, P., League City, TX 77573 (US)
(74) Representative: Bjerre, Nils B.J.
(86) International application number: PCT/US95/00808
(87) International publication number: WO 95/20623

(56) References cited:
- DD-A- 248 371
- SU-A- 1 613 455
- US-A- 4 166 049
- US-A- 4 358 554
- US-A- 4 430 464

## Description

### Field of the Invention

A process for preparing tire rubber modified asphalt cement systems by incorporating ground tire rubber into distillation tower bottoms using bombardment by air to make a homogeneous asphalt cement system.

### Background of the Invention

Processes for incorporating ground tire rubber into bituminous material to make asphalt cement systems suitable for paving, roofing and other uses have hitherto been unduly complex and thus costly in use. Known processes use additional constituents of the composition and additional process steps in an attempt to provide a homogeneous system. Such attempts have not been successful.

Duong et al., U.S. Patent No. 5,270,361, is directed to a process for making an asphalt composition which includes synthetic or natural rubber which may be in particles of up to one-half inch in thickness. Elemental selenium or an organo-selenium compound is added into the mixture to act as a substitute for the sulfur which is removed during the vulcanization process. The selenium or organo-selenium compound acts as a cross-linking agent. The composition is treated with pressurized air in a dehydrogenation reaction. In the dehydrogenation vessel, the dispersing device includes a pair of discs turning at 3600 rpm which promotes homogenization and acceleration of the dehydrogenation reaction. Elemental selenium or an organo-selenium compound is added into the homogenized composition and mixed in a static mixer. The asphalt composition is then recovered and stored in a container at about 150 to 175°C.

Wilkes, U.S. Patent No. 4,609,696, describes a rubberized asphalt composition which is made by combining asphalt with a hydrocarbon oil to provide a homogenized asphalt-oil mixture or solution, combining the mixture with particulate rubber to provide a homogeneous gel and emulsifying the gel by passing the asphalt-rubber-oil gel, with water, through a colloid mill.

Oliver, U.S. Patent No. 4,430,464, describes a pavement binder composition in which rubber particles are digested in a bituminous material. McDonald, U.S. Patent Nos. 4,069,182 and 3,891,585, describe an elastomeric pavement repair composition and a method for making the composition. Winters et al., U.S. Patent No. 3,919,148, also describes an elastomeric paving material.

Pagen et al., U.S. Patent No. 4,588,634 describes a roofing material using bitumen and ground tire rubber together with mineral stabilizer and an elastomeric polymer composition. Air bombardment is not used.

### Summary of the Invention

The invention provides a process for preparing homogenized tire rubber modified asphalt cement systems which have only two components, distillation tower bottoms (DTB) and ground tire rubber (GTR). No chemicals or special aromatic oils or additives are needed in this process.

According to the process, a single stage of dehydrogenation accomplishes stable combination of the tire rubber and bituminous residue by bombarding with a high volume of air under pressure. The two components are combined into a new composite which is completely homogenized and is stable. The homogenized asphalt composition product does not separate or degrade even over a long period of time. The asphalt composition is useful in the paving and roofing industries.

The process may be a one-stage process or a two stage process. The two components are combined into a new composite which is completely homogenized and is stable. The homogenized asphalt composition product does not separate or degrade even over a long period of time. The asphalt composition is useful in the paving and roofing industries.

The dehydrogenation is carried out in a reactor having a stationary air spider located at the bottom of the reactor. The base oil is distillation tower bottoms (DTB) which is the bituminous residue after vacuum distillation, atmospheric distillation, steam stripping of petroleum or other processes known to those skilled in the art. The ground tire rubber (GTR) is recycled rubber obtained from grinding scrap vulcanized rubber tires, tubes, etc. Ground tire rubber is loaded into the DTB in an amount ranging from 1% to 27%, preferably about 10-16%, and most preferably about 12%. The GTR may be sized from a powder grind (about 74 microns or more (about 200 mesh or less)) up to about 841 microns (20 mesh). The air volume input through the stationary air distributing spider-shaped device may range from about 45.3 (1600) to about 79.2 m³/min (2800 cfm) and from about 41 kPa (6 psi) to about 103 kPa (15 psi), preferably about 62.3 m³/min (2200 cfm) at about 68.9 kPa (10 psi).

In the one-stage process, the ground tire rubber and distillation tower bottoms are added into a converter and bombarded with air under increased temperature and pressure so that the ground tire rubber is abrasively absorbed into the distillation tower bottoms in the converter. The wetting process and dehydrogenation process takes place in a single step, using a two-component blend of distillation tower bottoms (DTB) and ground tire rubber (GTR) which are combined in a single stage which takes place in the converter. No special blending is needed prior to or following the process of dehydrogenation. The dehydrogenation is carried out by bombarding with air at about 62.3 m³/min (2200 cfm) at about 68.9 kPa (10 psi) at a temperature of about 219-243°C (425-470°F). The total dehydrogenation time is about 2 to 8 hours.

In the two-stage process, the process includes a wetting process and a dehydrogenation process, using a two-component blend of distillation tower bottoms (DTB) and ground tire rubber (GTR). Like the one-stage process, no special blending is needed prior to or following the process of dehydrogenation. The dehydrogenation is carried out by bombarding with air at 62.3 m³/min (2200 cfm) at 68.9 kPa (10 psi) with a beginning temperature of about 177°C (350°F) and an ending temperature of about 252°C (485°F). The total dehydrogenation time is about 2 to 6 hours.

### Brief Description of the Drawings

Figure 1 illustrates, schematically, apparatus used in a one-stage process of the invention.

Figure 2 illustrates, schematically, apparatus used in a two-stage process of the invention.

### Detailed Description of the Preferred Embodiments

The invention advantageously provides an asphalt composition which incorporates a bituminous residue, such as distillation tower bottoms (DTB) in a homogeneous mixture with ground tire rubber (GTR) for use in the roofing and paving industries or otherwise as will be apparent to one skilled in the art. The two-component asphalt composition produced is simple and economical to prepare. The product is a completely homogenized asphalt composition in which the ground tire rubber is fully incorporated into the distillation tower bottoms. The resulting composition is stable and does not separate out. No additives need to be used. Only distillation tower bottoms and ground tire rubber are used in preferred embodiments of the process.

According to a one-stage process of the invention, compressed air is pumped into an empty converter, distillation tower bottoms are transferred from a storage vessel, where it is maintained at about 177°C (350°F.), into the converter while the air is being pumped into the converter. After the distillation tower bottoms are in the converter, the ground tire rubber is pumped, pneumatically, into the converter. The air is constantly flowing throughout the entire process. The temperature in the converter is about 219-243°C (425-470°F.), preferably about 232°C (450°F.), and the distillation tower bottoms and ground tire rubber are bombarded by the compressed air in the converter to allow abrasive absorption of the asphaltic oils of the distillation tower bottoms into the ground tire rubber and complete digestion of the ground tire rubber into the distillation tower bottoms. The finished product is of a single composition and is a stable homogeneous product. The process is conducted in a closed system that is vented through a knockout tank with a liquid seal, followed by a dry tank, and the vapor recovery is concluded by incineration in an incinerator which is maintained at a minimum temperature of 719°C (1325°F). The finished product is transferred from the converter and shipped for storage or blended and incorporated into other products. The finished product and any blends thereof may be stored and handled at 177°C (350°F).

In the converter, the ground tire rubber is "wetted" with the distillation tower bottoms while being bombarded with a high volume of air which causes intimate mixing of the rubber molecules and bituminous molecules causing dehydrogenation of the rubber and complete and stable homogenization of the resulting composition. Lower hydrocarbon oils are driven off and a completely homogenized asphalt composition which is the product of the process remains in the dehydrogenation vessel.

In the two-stage process of the invention, the ground tire rubber is "wetted" with the distillation tower bottoms and passed into a dehydrogenation vessel in which the wetted mixture is bombarded with a high volume of air which causes intimate mixing of the rubber molecules and bituminous molecules causing dehydrogenation of the rubber and complete and stable homogenization of the resulting composition. Lower hydrocarbon oils are driven off and a completely homogenized asphalt composition which is the product of the process remains in the dehydrogenation vessel.

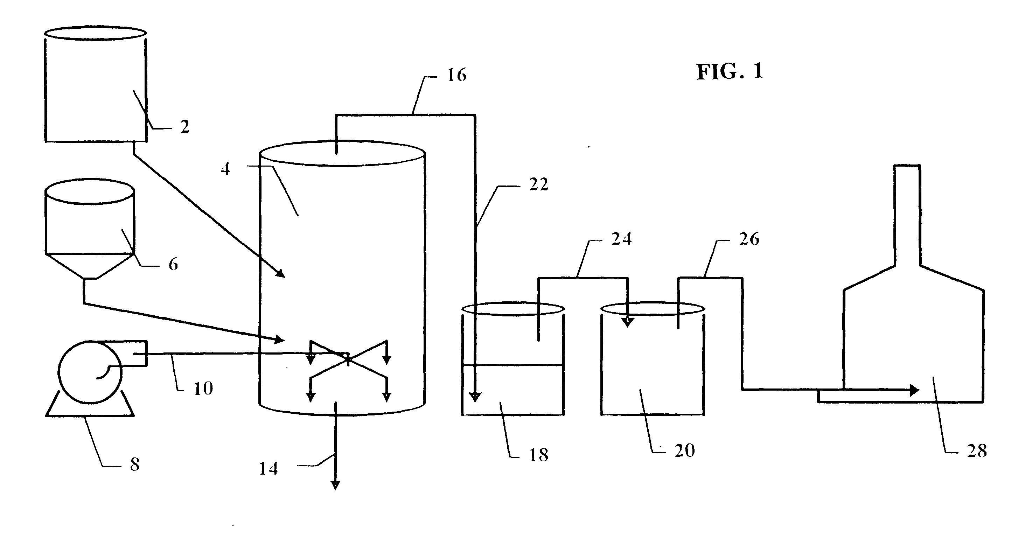

Figure 1 illustrates the one-stage process of the invention, schematically. Distillation tower bottoms (DTB) are stored in vessel 2. A charge of DTB is pumped directly into converter 4 together with a charge of ground tire rubber (GTR) fed from hopper 6. The GTR may be sized from a powder grade (about 74 microns or more (200 mesh or less)) up to about 841 microns (20 mesh). In a typical application, the GTR is present in a ratio of 1:99 to 27:33 with respect to DTB, preferably in a ratio of 10:90 to 16:84 and most preferably about 12:88 with respect to DTB. Pressurized air is fed from air compressor 8 at 45.3-79.2 m³/min (1600 to 2800 cfm) and a pressure of 41-103 kPa (6 to 15 psi) through conduit 10 and stationary spider device 12 which allows the pressurized air to enter the bottom of converter 4, in which dehydrogenation takes place. In a preferred embodiment, the air is pumped into converter 4 through the stationary spider device 12 at 62.3 m³/min (2200 cfm) and 68.9-103 kPa (10 to 15 psi). As the air bombards the mixture in converter 4, a dehydrogenation process takes place. The dehydrogenation process takes place by injecting air at, for example, 62.3 m³/min (2200 cfm) into the bottom of the vessel through the stationary air spider and maintaining the air flow at 68.9 kPa (10 psi) throughout the process. The temperature in the converter is held at about 219-243°C (425-470° F) during the process. The temperature and airflow are maintained until the targeted softening point is achieved. The material may be sampled every 30 minutes, or as otherwise known to one skilled in the art. The duration of the process may be about 2 to 14 hours for reaching the targeted softening point. Once the targeted softening point is reached, the air and heat are shut off and the finished product, which is completely homogeneous is transferred through conduit 14 using a finished product pump (not shown) to the finished product storage. Hydrocarbons released in the dehydrogenation tank are passed to a hydrocarbon collection and vapor recovery area through conduit 16 to knockout tank 18 and dry tank 20. The vapor recovery system takes place through conduits 22, 24, 26. In one example, any remaining uncondensed hydrocarbons are burned in incinerator 28 using a gas fired burner at a temperature of about 719°C (1325°F), minimum.

Throughput of the process may be 100 to 500 tons per day using one converter or otherwise as known to one skilled in the art. Other equipment may be used to achieve a similar result. The examples describe preferred embodiments.

A typical sample of DTB may have the following properties:

| | |
|---|---|
| Viscosity at 60°C (140°F) (poises) ASTM 2171 | (15-50 ps) 1.5-5.0 Pa·s |
| Softening point of flint ASTM D113 | (40-70°F) 4.4 - 21°C |
| Flash point, °F, min. COC ASTM D92 | (560°F) 293°C |

### Example 1 - PAVING GRADE, 15% CONCENTRATE

A full volume of air 62.3 m³/min (2200 cfm) at 68.9 kPa (10 psi), was initiated into a reactor. The reactor was then charged with 70.5 tons of DTB, at 177°C (350°F). The air volume and pressure was maintained and the air flow continued at 62.3 m³/min (2200 cfm) at 68.9 kPa (10 psi) throughout the entire process. After the desired amount (70.5 tons) of DTB was transferred, GTR was pneumatically pumped into the liquid level of the DTB in the reactor. The agitation action of the air into the materials provided an excellent mixture of the GTR and DTB. To charge 12.44 tons of GTR into 70.5 tons DTB takes approximately 80 minutes. The reactor is heated to no more than 243°C (470°F) and no less than 219°C (425°F). Once the desired temperature is achieved samples are pulled every hour until the desired softening point of 110°C (230°F) is achieved. Once the targeted softening point is achieved, the air and heat are shut off and the process is completed. The targeted softening point was achieved after 12 hours and 30 minutes. The finished material is pumped into a vessel for downblending and polymer modification process. Once downblended to a 5% GTR concentrate, using AC-5 and modified with synthetic rubber, the final material is transferred to a holding vessel for shipment. The physical characteristics of the downblended material are shown in Table 1.

**TABLE 1**

| **AC-15-5TR PAVING GRADE ASPHALT CEMENT Use in Chip Seal Applications** | |
|---|---|
| **TESTS** | **RESULTS** |
| **ASTM METHOD** | |
| Viscosity @ 60°C (140°F), Poises ASTM D2171 | (3700 ps) 370 Pa·s |
| Viscosity @ 135°C (275°F), Poises Texas Item 300 | (6.5 ps) 0.65 Pa·s |
| Penetration @ 25°C (77°F) 100g, 5 sec, dmm ASTM D5 | 116 |
| Softening Point, °F ASTM D36 | (126°F) 52°C |
| Flash Point, °F, COC ASTM D92 | (555°F) 291°C |
| Ductility @ 4.0°C (39.2°F) 5 cm/min, cm ASTM D113 | 44.0 cm |
| Storage Stability 48 hrs @ (325°F) 163°C Softening Point difference between Top and Bottom Texas Item 300 | 0.5% |

### Example 2 - PAVING GRADE 15% CONCENTRATE

A full volume of air, 62.3 m³/min (2200 cfm) at 68.9 kPa (10 psi), was initiated into a reactor. The reactor was then charged with 75.6 tons of DTB, at 177°C (350°F). The air volume and pressure is maintained and continues to flow throughout the entire process. After the desired amount of DTB was transferred, the GTR was pneumatically pumped into the liquid level of the DTB in Reactor 2. The agitation action of the air into the materials provided an excellent mixture of the GTR and DTB. To charge 13.34 tons of GTR takes approximately 90 minutes. The reactor is heated to no more than 243°C (470°F) and no less than 219°C (425°F). Once the desired temperature is achieved samples are pulled every hour until the desired softening point of 230°F is achieved. Once the targeted softening point is achieved, the air and heat are shut off and the process is completed. The targeted softening point was achieved after 13 hours and 10 minutes. The finished material is pumped into a vessel in preparation for the downblending and polymer modification process. Once downblended to a 5% GTR concentrate, using AC-20 and modification with synthetic rubber, the downblended material is transferred to a holding vessel for shipment. The physical characteristics of the downblended material are shown in Table 2.

**TABLE 2**

| **AC-45-5TR PAVING GRADE ASPHALT CEMENT Use in Hot Mix Applications** | |
|---|---|
| **TESTS** | **RESULTS** |
| **ASTM METHOD** | |
| Viscosity @ 60°C (140°F), Poises ASTM D2171 | (5664 ps) 566.4 Pa·s |
| Viscosity @ 135°C (275°F), Poises Texas Item 300 | (11.0 ps) 1.10 Pa·s |
| Penetration @ 25°C (77°F) 100g, 5 sec, dmm ASTM D5 | 70 |
| Softening Point, °F ASTM D36 | (127°F) 53°C |
| Flash Point, °F, COC ASTM D92 | (559°F) 293°C |
| Ductility @ 4.0 °C (39.2°F) 5 cm/min, cm ASTM D113 | 21.5 cm |
| Storage Stability 48 hrs @ (325°F) 163°C Softening Point difference between Top and Bottom Texas Item 300 | 0.75% |

### Example 3 - ROOFING COATING GRADE @ 5% CONCENTRATE

A full volume of air 62.3 m³/min (2200 cfm) at (68.9 kPa (10 psi), was initiated into a reactor. The empty reactor was then charged with 28.5 tons of DTB, at 177°C (350°F). The air volume and pressure is maintained and continues to flow throughout the entire process. After the desired amount of DTB is transferred, the GTR is pneumatically pumped into the liquid level of the DTB in the reactor. The agitation action of the air into the materials provided an excellent mixture of the GTR and DTB. To charge 1.5 tons of GTR takes aprox. 20 minutes. The reactor is heated to no more than 243°C (470°F) and no less than 219°C (425°F). Once the desired temperature is achieved samples are pulled every hour until the desired softening point of 93°C (200°F) is achieved. Once the targeted softening point is achieved, the air and heat are shut off and the process is completed. The targeted softening point was achieved after 8 hours and 15 minutes. The material is transferred to a holding vessel for shipment. The physical characteristics of the material are shown in Table 3.

**TABLE 3**

| **TRMAC COATING ROOFING GRADE ASPHALT CEMENT Use in Manufacturing of Roofing Shingles and Roll Goods** | |
|---|---|
| **TESTS** | **RESULTS** |
| **ASTM METHOD** | |
| Viscosity @ 204°C (400°F), Poises Florida 336-1 | (2.68 ps) 0.268 Pa·s |
| Penetration @ 25°C (77°F) 100g, 5 sec, dmm ASTM D5 | 20 |
| Softening Point, °F ASTM D36 | (200.F) 93°C |
| Flash Point, °F, COC ASTM D92 | (570°F) 299°C |
| Ductility @ 25°C (77°F) 1 cm/min, cm ASTM D113 | 6.0 cm |

The product of each of the three examples described above is a stable, heat resistant product. The same two-step process was used for each example, with different volumes. The dehydrogenation is achieved without incorporating any chemicals or additional aromatic oils or additives.

The process yields material suitable for use in both roofing and paving industries. The different materials have a different proportion of GTR loading in the DTB and a different time of dehydrogenation processing to achieve the different properties required in the final materials.

About 1-5% of polymer material such as synthetic rubber is capable of being incorporated together with the GTR into the DTB. Examples of synthetic materials are styrene-butadiene-styrene (SBS), styrene-butadiene-rubber (SBR), polyethylene, polyisoprene, polybutylene, polychloroprene (neoprene), nitrile rubber (acrylonitrile butadiene), butyl rubber (copolymer of isobutylene and isoprene) polyacrylonitrile and other materials known to one skilled in the art. Use of excess amounts of synthetic rubbers would cause degradation of the synthetic rubber.

If an insufficient quantity of air is used or if the residence time in the air bombardment vessel is insufficient, the product is unstable and/or not properly homogeneous and thus is liable to separate out.

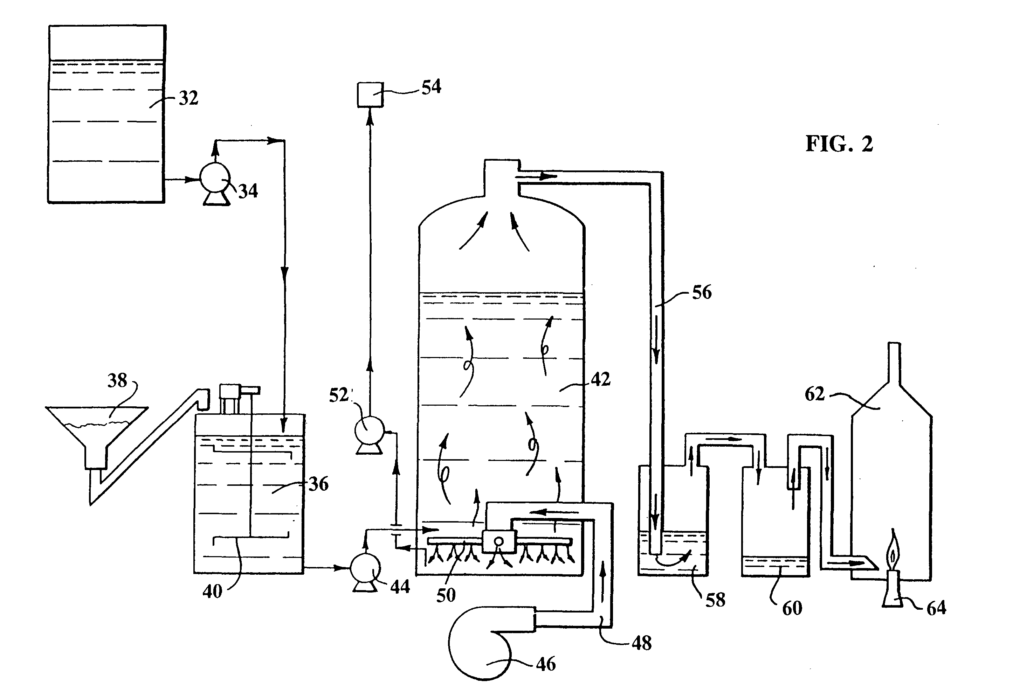

Figure 2 illustrates a two-stage process of the invention, schematically. Distillation tower bottoms (DTB) are stored in vessel 32. A charge of DTB is pumped by charge pump 34 into wetting vessel 36 together with a charge of ground tire rubber (GTR) fed from hopper 38. The GTR may be sized from a powder grade (about 74 microns or more (200 mesh or less)) up to about 841 microns (20 mesh). The DTB and GTR are thoroughly mixed together using stirrer 40, thoroughly wetting the GTR with DTB. In a typical application, the GTR is present in a ratio of 1:99 to 27:33 with respect to DTB, preferably in a ratio of 10:90 to 16:84 and most preferably about 12:88 with respect to DTB. The mixture from wetting vessel 26 is pumped to dehydrogenation vessel 42 using reactor feed pump 44. Pressurized air is fed by pump 46 at 45.3-79.2 m³/min (1600 to 2800 cfm) and a pressure of 41-103 kPa (6 to 15 psi) through conduit 48 and stationary spider device 50 which allows the pressurized air to enter the bottom of dehydrogenation vessel 42. In a preferred embodiment, the air is pumped into dehydrogenation vessel 42 through the stationary spider device 50 at 62.3 m³/min (2200 cfm) and 68.9-103 kPa (10 to 15 psi). As the air bombards the mixture in vessel 42, a dehydrogenation process takes place.

The dehydrogenation process takes place by injecting air at, for example 62.3 m³/min (2200 cfm) into the bottom of the vessel through the stationary air spider and maintaining the air flow at 68.9 kPa (10 psi) throughout the process. The process starts with a dehydrogenation reactor temperature of 149-191°C (300 to 375°F) and the temperature is increased to 252°C (485°F) during the process. The temperature and airflow are maintained until the targeted softening point is achieved. The material may be sampled every 30 minutes, or as otherwise known to one skilled in the art. The duration of the process may be about 2 to 6 hours for reaching the targeted softening point. Once the targeted softening point is reached, the air and heat are shut off and the finished product, which is completely homogeneous is transferred using the finished product pump 52 to finished product storage 54. Hydrocarbons released in the dehydrogenation tank are passed to a hydrocarbon collection and vapor recovery area through conduit 56 to knockout tank 58 and condensate tank 60. In one example, any remaining uncondensed hydrocarbons are burned in incinerator 62 using gas fired burner 64 at a temperature of 816°C (1500°F).

Throughput of the process may be 300 to 400 tons per day using one reactor and one wetting vessel or otherwise as known to one skilled in the art. Other equipment may be used to achieve a similar result. The examples describe preferred embodiments.

A typical sample of DTB may have the following properties:

| | |
|---|---|
| Viscosity at 60°C (140°F) (poises) ASTM 2171 | (15-50 ps) 1.5-5.0 Pa·s |
| Softening point of flint ASTM D113 | (40-70°F) 4.4-21°C |
| Flash point, °F, min. COC ASTM D92 | (560° F) 293°C |

### Example 4

In laboratory size equipment, 807.5 g DTB is heated to 177°C (350° F), 42.5 g GTR is added to the DTB and stirred for one minute until all the dry GTR is incorporated into the DTB. The total mixture is poured into a lab size reactor. 0.85 m³/min (30 Cfm) of air at 14 kPa (2 psi) is injected into the reactor through a stationary air spider located at the bottom of the vessel. The reactor is heated and maintained at 252°C (485°F). Samples are pulled every 30 minutes after the air inflow is initiated. At a targeted 54°C (130°F) softening point, the air and heat are shut off. The material is drained into a sample can and tested.
The physical characteristics of the material produced are shown in Table 1, below.

**TABLE 4 -**

| **PAVING** | | |
|---|---|---|
| TESTS | RESULTS | ASTM |
| METHOD | | |
| Softening Point, °F ASTM D36 | (131°F) 55°C | |
| Penetration at 25°C (77°F) 100g, 5 sec, dmm ASTM D5 | 68 | |
| Flash point °F, COC ASTM D92 | (585°F) 307°C | |
| Viscosity at 60°C (140°F) (poises) ASTM D2171 | (8500 ps) 850.0 Pa·s | |
| Ductility at 4.0°C (39.2°F) 5cm/min, cm ASTM D113 | 6.5 cm | |
| Storage Stability 48 hrs at (325°F) 163°C Softening Point difference between Top and Bottom Texas Item 300 | 1.5% | |
| Brookfield Viscosity, at 163°C (325°F) (poises) Florida 336-1 | (3.25 ps) 0.325 Pa·s | |
| Storage Stability Long Term, 30 days at 163°C (325°F) difference between Top and Bottom Texas Item 300 | 3.0% | |

### Example 5

2550 g DTB is heated to 177°C (350° F). 850 g GTR is added to the DTB and stirred for 2 minutes until the GTR is completely wetted and incorporated into the DTB. The mixture is poured into a large lab size reactor. 3.68m³/min (130 cfm) of air at 14 kPa (2 psi) is injected into the reactor via a stationary air spider located at the bottom of the vessel. The reactor is heated and maintained at 246°C (475° F). Samples are pulled every 30 minutes after initiating the air flow. After the mixture is homogenized and the GTR is dissolved in the DTB, the process is shutdown. The material is drained into a sample can and tested. The physical characteristics are as follows.

**TABLE 5 -**

| **ROOFING** | | |
|---|---|---|
| TESTS | RESULTS | ASTM |
| METHOD | | |
| Softening Point, °F ASTM D36 | (240°F) 116°C | |
| Penetration at 25°C (77°F) 100g, 5 sec, dmm ASTM D5 | 18 | |
| Flash point °F, COC ASTM D92 | (585°F) 307°C | |
| Viscosity at 60°C (140°F) (poises) ASTM D2171 | N/A | |
| Ductility at 4.0°C (39.2°F) 5cm/min, cm ASTM D113 | 1.0 cm | |
| Storage Stability 48 hrs at (400°F) 204°C Softening Point difference between Top and Bottom Texas Item 300 | 1.0% | |
| Brookfield Viscosity, at 204°C (400°F), poises Florida 336-1 | (81.45 ps) 8.145 Pa·s | |
| Storage Stability Long Term, 30 days at 204°C (400 F) difference between Top and Bottom Texas Item 300 | 1.0% | |

### Example 6

70.4 tons DTB is heated to 177°C (350°F). 9.6 tons GTR is added to the DTB through a wetting vessel. GTR is added into the top of the vessel using a top mounted tank mixer to pull the dried GTR into the DTB. The wetting process takes approximately 1.5 hours until the entire amount of GTR is incorporated into the DTB. The mixture is transferred into a dehydrogenation reactor. 62.3 m³/min (2200 cfm) of air at 68.9 kPa (10 psi) is injected into the bottom of the reactor via a stationary air spider located at the bottom of the vessel. The air volume and pressure is maintained throughout the entire process. The vapor recovery incinerator is maintained at 816°C (1500°F) throughout the entire process. The reactor is heated and maintained at 243°C (470°F). Samples are pulled every 30 minutes after the process has been operating for two hours. At a targeted 54°C (130°F) softening point, the air and heat are shut off and the process is completed. The softening point is achieved after 3 hours and 25 minutes. The finished material is pumped into a holding vessel for shipment and tested. The physical characteristics of the final material are shown in Table 3.

**TABLE 6 -**

| **PAVING** | | |
|---|---|---|
| TESTS | RESULTS | ASTM |
| METHOD | | |
| Softening Point, °F D36 | (135°F) 57°C | ASTM |
| | | |
| Penetration at 25°C (77°F) 100g, 5 sec, dmm D5 | 62 | ASTM |
| | | |
| Flash point °F, COC D92 | (585°F) 307°C | ASTM |
| | | |
| Viscosity at 60°C (140°F), Poises D2171 | (8600 ps) 860.0 Pa·s | ASTM |
| | | |
| Ductility at 4.0°C (39.2°F) 5cm/min, cm D113 | 4.5 cm | ASTM |
| Storage Stability 48 hrs at 163°C (325°F) Softening Point difference between Top and Bottom Texas Item 300 | 1.5% | |
| | | |
| Brookfield Viscosity, at 163°C (325°F) (poises) Florida 336-1 | (6.75 ps) 0.675 Pa·s | |
| | | |
| Storage Stability Long Term, 30 days at 163°C (325°F) difference between Top and Bottom Texas Item 300 | 2.0% | |

The product of each of the three examples described above is a stable, heat resistant product. The same two-step process was used for each example, with different volumes. The dehydrogenation is achieved without incorporating any chemicals or additional aromatic oils or additives.

The process yields material suitable for use in both roofing and paving industries. The different materials have a different proportion of GTR loading in the DTB and a different time of dehydrogenation processing to achieve the different properties required in the final materials.

About 1-5% of polymer material such as synthetic rubber is capable of being incorporated together with the GTR into the DTB. Examples of synthetic materials are styrene-butadiene-styrene (SBS), styrene-butadiene-rubber (SBR), polyethylene, polyisoprene, polybutylene, polychloroprene (neoprene), nitrile rubber (acrylonitrile butadiene), butyl rubber (copolymer of isobutylene and isoprene) polyacrylonitrile and other materials known to one skilled in the art. Use of excess amounts of synthetic rubbers would cause degradation of the synthetic rubber.

If an insufficient quantity of air is used or if the residence time in the air bombardment vessel is insufficient, the product is unstable and/or not properly homogeneous and thus is liable to separate out.

While the invention has been described above with respect to certain embodiments thereof, it will be appreciated by one skilled in the art that variations and modifications may be made without departing from the spirit and scope of the invention.

## Claims

1. A process for preparing a homogeneous asphalt composition consisting essentially of the steps of:
introducing distillation tower bottoms at a temperature of about 177-252°C (350°-485°F) into a vessel;
introducing ground tire rubber into the vessel;
passing air at about 41-103 kPa (6-15 psi) pressure through the vessel, thereby bombarding the ground tire rubber and distillation tower bottoms in the vessel with the air under pressure to incorporate the ground tire rubber into the distillation tower bottoms;
obtaining a stable homogeneous, incorporated asphalt composition of ground tire rubber and distillation tower bottoms.
recovering the incorporated asphalt composition.

2. A process according to claim 1, wherein the steps are carried out in the following sequence:
passing the air through the vessel;
introducing the distillation tower bottoms into the vessel;
introducing the ground tire rubber into the vessel in which the distillation tower bottoms are being bombarded with air.

3. A process according to one of claims 1 or 2, comprising the following sequential steps:
injecting air at about 41-103 kPa (6-15 psi) pressure at a rate of about 45.3-79.2 m³/min (1600-2800 cfm) for about 2-14 hours through a stationary spider-shaped device mounted in the vessel;
introducing about 86-90% distillation tower bottoms at a temperature of about 177-252°C (350°-485°F) into the vessel for bombarding with the injected air; and
introducing about 10-14% ground tire rubber into the vessel; bombarding the distillation tower bottoms and ground tire rubber in the vessel with the injected air.

4. A process according to claim 1, wherein the steps are carried out in the following sequence:
mixing the ground tire rubber with distillation tower bottoms to form a wetted mixture of the ground tire rubber and the distillation tower bottoms;
introducing the wetted mixture into the vessel;
bombarding the wetted mixture with air at a temperature of about 177-252°C (350° - 485° F) at about 41-103 kPa (6-15 psi) pressure.

5. A process according to one of claims 1 or 4, comprising the following sequential steps:
mixing about 10-14% ground tire rubber with about 86-90% distillation tower bottoms to form a wetted mixture of the ground tire rubber with the distillation tower bottoms;
injecting air at a temperature of about 177-252°C (350°-485°F) at a flow rate of about 45.3-79.2 m³/min (1600-2800 cfm) and about 41 - 103 kPa (6-15 psi) pressure for about 2 to 14 hours through a stationary spider-shaped device mounted in the vessel;
bombarding the wetted mixture of ground tire rubber and distillation tower bottoms with the injected air.

6. A process according to one of claims 1, 2 or 4, wherein about 1-27% ground tire rubber is mixed into about 73-99% distillation tower bottoms.

7. A process according to one of claims 1, 2 or 4, wherein about 10-15% ground tire rubber is mixed into about 85-90% distillation tower bottoms.

8. A process according to one of claims 1 to 5, wherein after the ground tire rubber is mixed with the distillation tower bottoms, the temperature of the process is maintained at a temperature of about 218-246°C (425°-475°F).

9. A process according to one of claims 1, 2 or 4, wherein the air bombardment is carried out for about 2-14 hours.

10. A process according to one of claims 1, 2 or 4, wherein the air bombardment is carried out at about 45.3 - 79.2 m³/min (1600-2800 cfm).

11. A process according to one of claims 1 to 5, wherein the air bombardment is carried out at about 56.6-67.9 m³/min (2000-2400 cfm).

12. A process according to one of claims 1, 2 or 4, wherein the air for bombarding the wetted mixture is injected through a stationary spider-shaped injector device.

13. A process according to claims 1, 2 or 4, wherein the ground tire rubber includes rubber selected from natural rubber and synthetic rubber.

14. A process according to one of claims 1 to 5, wherein the air bombardment is carried out for about 2-6 hours.

## Patentansprüche

1. Verfahren zum Herstellen einer homogenen Asphaltzusammensetzung, bestehend im Wesentlichen aus den Schritten:
Einbringen eines Destillationsturmbodenprodukts mit einer Temperatur von ungefähr 177 - 252°C (350° - 485°F) in ein Gefäß;
Einbringen von zerkleinertem Reifengummi in das Gefäß;
Leiten von Luft mit ungefähr 41- 103 kPa (6 - 15 psi) Druck durch das Gefäß und dadurch Beschiessen des zerkleinerten Reifengummis und des Destillationsturmbodenprodukts in dem Gefäß mit der Luft unter Druck, um den zerkleinerten Reifengummi in das Destillationsturmbodenprodukt einzumischen;
Erhalten einer stabilen homogenen zusammengemischten Asphaltzusammensetzung aus zerkleinertem Reifengummi und Destillationsturmbodenprodukt;
Gewinnen der zusammengemischten Asphaltzusammensetzung.

2. Verfahren nach Anspruch 1, worin die Schritte in der folgenden Reihenfolge durchgeführt werden:
Leiten der Luft durch das Gefäß;
Einbringen des Destillationsturmbodenprodukts in das Gefäß;
Einbringen des zerkleinerten Reifengummis in das Gefäß, in dem das Destillationsturmbodenprodukt mit Luft beschossen wird.

3. Verfahren nach einem der Ansprüche 1 oder 2, umfassend die folgenden aufeinanderfolgenden Schritte:
Injizieren von Luft mit ungefähr 41 - 103 kPa (6 - 15 psi) Druck mit einer Geschwindigkeit von ungefähr 45,3 - 79,2 m³/min (1600 - 2800 cfm) während ungefähr 2 - 14 Stunden durch eine stationäre spinnenförmige Vorrichtung, die in dem Gefäß angebracht ist;
Einbringen von ungefähr 86 - 90 % Destillationsturmbodenprodukt mit einer Temperatur von ungefähr 177 - 252°C (350° - 485°F) in das Gefäß zum Beschiessen mit der injizierten Luft; und
Einbringen von ungefähr 10 - 14 % zerkleinertem Reifengummi in das Gefäß; Beschiessen des Destillationsturmbodenprodukts und des zerkleinerten Reifengummis in dem Gefäß mit der injizierten Luft.

4. Verfahren nach Anspruch 1, worin die Schritte in der folgenden Reihenfolge durchgeführt werden:
Vermischen des zerkleinerten Reifengummis mit Destillationsturmbodenprodukt, um ein benetztes Gemisch aus dem zerkleinerten Reifengummi und dem Destillationsturmbodenprodukt zu bilden;
Einbringen des benetzten Gemisches in das Gefäß;
Beschiessen des benetzten Gemisches mit Luft mit einer Temperatur von ungefähr 177- 252°C (350° - 485°F) mit einem Druck von ungefähr 41- 103 kPa (6 - 15 psi).

5. Verfahren nach einem der Ansprüche 1 oder 4, umfassend die folgenden aufeinanderfolgenden Schritte:
Vermischen von ungefähr 10 - 14 % zerkleinertem Reifengummi mit ungefähr 86 - 90 % Destillationsturmbodenprodukt, um ein benetztes Gemisch aus dem zerkleinerten Reifengummi mit dem Destillationsturmbodenprodukt zu bilden;
Injizieren von Luft mit einer Temperatur von ungefähr 177 - 252°C (350° - 485°F) mit einer Fließgeschwindigkeit von ungefähr 45,3 - 79,2 m³/min (1600 - 2800 cfm) und einem Druck von ungefähr 41 - 103 kPa (6 - 15 psi) während ungefähr 2 bis 14 Stunden durch eine stationäre spinnenförmige Vorrichtung, die in dem Gefäß angebracht ist;
Beschiessen des benetzten Gemisches aus zerkleinertem Reifengummi und Destillationsturmbodenprodukt mit der injizierten Luft.

6. Verfahren nach einem der Ansprüche 1, 2 oder 4, worin ungefähr 1 - 27 % zerkleinerter Reifengummi in ungefähr 73 - 99 % Destillationsturmbodenprodukt eingemischt wird.

7. Verfahren nach einem der Ansprüche 1, 2 oder 4, worin ungefähr 10- 15 % zerkleinerter Reifengummi in ungefähr 85 - 90 % Destillationsturmbodenprodukt eingemischt wird.

8. Verfahren nach einem der Ansprüche 1 bis 5, worin, nachdem der zerkleinerte Reifengummi mit dem Destillationsturmbodenprodukt vermischt ist, die Temperatur des Verfahrens bei einer Temperatur von ungefähr 218 - 246°C (425° - 475°F) gehalten wird.

9. Verfahren nach einem der Ansprüche 1, 2 oder 4, worin der Beschuss mit Luft während ungefähr 2 - 14 Stunden erfolgt.

10. Verfahren nach einem der Ansprüche 1, 2 oder 4, worin der Beschuss mit Luft mit ungefähr 45,3 - 79,2 m³/min (1600 - 2800 cfm) erfolgt.

11. Verfahren nach einem der Ansprüche 1 bis 5, worin der Beschuss mit Luft mit ungefähr 56,6 - 67,9 m³/min (2000 - 2400 cfm) erfolgt.

12. Verfahren nach einem der Ansprüche 1, 2 oder 4, worin die Luft zum Beschiessen des benetzten Gemisches durch eine stationäre spinnenförmige Injektorvorrichtung injiziert wird.

13. Verfahren nach den Ansprüchen 1, 2 oder 4, worin der zerkleinerte Reifengummi Kautschuk umfasst, der aus Naturkautschuk und Synthesekautschuk ausgewählt ist.

14. Verfahren nach einem der Ansprüche 1 bis 5, worin der Beschuss mit Luft während ungefähr 2 - 6 Stunden erfolgt.

## Revendications

1. Procédé de préparation d'une composition d'asphalte homogène, qui consiste essentiellement en les opérations suivantes :
introduire des fonds de tour de distillation, se trouvant à une température approximative de 177 à 252°C (350 à 485°F) dans un récipient ;
introduire dans le récipient du caoutchouc de pneumatique moulu ;
faire passer de l'air au travers du récipient sous une pression approximative de 41 à 103 kPa. (de 6 à 15 psi), de manière à bombarder le caoutchouc de pneumatique voulu et les fonds de tour de distillation se trouvant dans le récipient au moyen de l'air sous pression, afin d'incorporer le caoutchouc de pneumatique moulu dans les fonds de tour de distillation ;
obtenir une composition d'asphalte mêlée homogène stable, faite de caoutchouc de pneumatique moulu et de fonds de tour de distillation.
récupérer la composition d'asphalte mêlée.

2. Procédé selon la revendication 1, où les opérations s'effectuent dans la succession suivante :
faire passer l'air dans le récipient ;
introduire les fonds de tour de distillation dans le récipient ;
introduire le caoutchouc de pneumatique moulu dans le récipient, dans lequel les fonds de tour de distillation sont en train d'être bombardés par de l'air.

3. Procédé selon la revendication 1 ou 2, comprenant les opérations successives suivantes :
injecter de l'air sous une pression approximative de 41 à 103 kPa. (de 6 à 15 psi) à un débit approximatif de 45,3 à 79,2 m³/min (de 1600 à 2800 cfm) pendant une durée approximative de 2 à 14 h dans un dispositif en forme de croisillon stationnaire qui est monté dans le récipient ;
introduire une quantité approximative de 86 à 90 % de fonds de tour de distillation se trouvant à une température approximative de 177 à 252°C (de 350 à 485°F) dans le récipient pour les bombarder au moyen de l'air injecté ; et
introduire une quantité approximative de 10 à 14 % de caoutchouc de pneumatique moulu dans le récipient ;
bombarder les fonds de tour de distillation et le caoutchouc de pneumatique moulu se trouvant dans le récipient au moyen de l'air injecté.

4. Procédé selon la revendication 1, où les opérations s'effectuent dans la succession suivante :
mélanger le caoutchouc de pneumatique moulu avec les fonds de tour de distillation afin de former un mélange mouillé fait du caoutchouc de pneumatique moulu et des fonds de tour de distillation ;
introduire le mélange mouillé dans le récipient ;
bombarder le mélange mouillé au moyen d'air sous une pression approximative de 41 à 103 kPa (de 6 à 15 psi) à une température approximative de 177 à 252°C (350 à 485°F).

5. Procédé selon la revendication 1 ou 4, comprenant les opérations successives suivantes:
mélanger une quantité approximative d'environ 10 à 14 % de caoutchouc de pneumatique moulu avec une quantité approximative de 86 à 90 % de fonds de tour de distillation afin de former un mélange mouillé du caoutchouc de pneumatique moulu avec les fonds de tour de distillation ;
injecter de l'air à une température approximative de 177 à 252°C (de 350 à 485°) avec un débit approximatif de 45,3 à 79,2 m³/min (de 1600 à 2800 cfm) et sous une pression approximative de 41 à 103 kPa (de 6 à 15 psi) pendant une durée approximative de 2 à 14 h dans un dispositif en forme de croisillon stationnaire qui est monté dans le récipient ;
bombarder le mélange mouillé de caoutchouc de pneumatique moulu et de fonds de tour de distillation au moyen de l'air injecté.

6. Procédé selon l'une quelconque des revendications 1, 2 et 4, où une quantité approximative de 1 à 27 % de caoutchouc de pneumatique moulu est mélangée dans une quantité approximative de 73 à 99 % de fonds de tour de distillation.

7. Procédé selon l'une quelconque des revendications 1, 2 et 4, où une quantité approximative de 10 à 15 % de caoutchouc de pneumatique moulu est mélangée dans une quantité approximative de 85 à 90 % de fonds de tour de distillation.

8. Procédé selon l'une quelconque des revendications 1 à 5, où, après que le caoutchouc de pneumatique moulu a été mélangé avec les fonds de tour de distillation, on maintient la température du traitement à une valeur approximative de 218 à 246°C (425 à 475°F).

9. Procédé selon l'une quelconque des revendications 1, 2 et 4, où le bombardement d'air s'effectue pendant une durée approximative de 2 à 14 h.

10. Procédé selon l'une quelconque des revendications 1, 2 et 4, où le bombardement d'air s'effectue à un débit approximatif de 45,3 à 79,2 m³/min (de 1600 à 2800 cfm).

11. Procédé selon l'une quelconque des revendications 1 à 5, où le bombardement d'air s'effectue à un débit approximatif de 56,6 à 67,9 m³/min (de 2000 à 2400 cfm).

12. Procédé selon l'une quelconque des revendications 1, 2 et 4, où l'air servant à bombarder le mélange mouillé est injecté via un dispositif injecteur en forme de croisillon stationnaire.

13. Procédé selon l'une quelconque des revendications 1, 2 et 4, où le caoutchouc de pneumatique moulu comporte du caoutchouc choisi parmi le caoutchouc naturel et le caoutchouc synthétique.

14. Procédé selon l'une quelconque des revendications 1 à 5, où le bombardement d'air s'effectue pendant une durée approximative de 2 à 6 h.
